# EUROPÄISCHE PATENTSCHRIFT

(11) **EP 4 246 326 B1**
(45) Veröffentlichungstag und Bekanntmachung des Hinweises auf die Patenterteilung: **08.05.2024**
(21) Anmeldenummer: 22163039.5
(22) Anmeldetag: 18.03.2022
(51) Int. Cl.: G06F 11/07, G06F 11/30

(54) **VERFAHREN, VORRICHTUNG UND SYSTEMANORDNUNG ZUR PROZESSÜBERWACHUNG IN ECHTZEIT**
METHOD, APPARATUS AND SYSTEM FOR REAL-TIME PROCESS MONITORING
PROCÉDÉ, DISPOSITIF ET ENSEMBLE SYSTÈME DE SURVEILLANCE DE PROCESSUS EN TEMPS RÉEL

(43) Veröffentlichungstag der Anmeldung: 20.09.2023
(73) Patentinhaber: Process Squad GmbH, 45219 Essen (DE)
(72) Erfinder: Ceh, Hendrik, 45219 Essen (DE); Heiber, Philip, 42549 Velbert (DE); Heine-Brach, Petra, 45219 Essen (DE); Khaiat, Bishr, 45143 Essen (DE); Spallek, Nick, 42549 Velbert (DE); Zemek, Luca, 42549 Velbert (DE); Zemek, Ranga, 46538 Dinslaken (DE)
(74) Vertreter: Reich, Jochen

(56) Entgegenhaltungen:
- US-A1- 2017 364 561
- US-A1- 2019 095 510

## Beschreibung

Die vorliegende Erfindung ist gerichtet auf ein Verfahren zum sicheren und effizienten Betreiben einer Systemanordnung zur Prozessoptimierung. Prozesse können hierbei im weitesten Sinne Programmabläufe sein, welche durch Hardwarekomponenten durchgeführt werden. Hierbei können entsprechende Systemparameter bzw. Hardwareparameter überwacht und sodann optimiert werden. Die vorgeschlagene Erfindung erkennt beispielsweise unvorteilhafte Abweichungen in der Hardwarebelegung und kann besonders effizient mittels einer vorteilhaften Lastenverteilung in einem Computernetzwerk betrieben werden. Die Erfindung ist ferner gerichtet auf eine entsprechend eingerichtete Vorrichtung sowie eine Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

US 2017/364561 zeigt ein System, ein Verfahren und eine Software zum Korrelieren von Ereignisdaten. Hierzu wird auf einen Kontext abgestellt.

EP 3 451 576 B1 zeigt ein System und Verfahren zur kryptographisch geschützten Überwachung wenigstens einer Komponente eines Geräts oder einer Anlage sowie ein dazugehöriges Computerprogramm(-produkt).

EP 3 264 208 A1 zeigt ein Verfahren zum Aktualisieren von Prozessobjekten eines in einem Engineerings-System hinterlegten Automatisierungsprojektes, wobei mittels des Engineerings-Systems eine Automatisierungseinrichtung zur Steuerung eines technischen Prozesses konfigurierbar ist und wobei ferner mittels eines Operator-Systems der zu steuernde technische Prozess bedien- und beobachtbar ist.

EP 2 487 860 B1 zeigt ein Verfahren zur Verbesserung der Detektion von Sicherheitsbedrohungen in einem Kommunikationsnetzwerk, wobei das Kommunikationsnetzwerk Sicherheitsvorrichtungen enthält, welche Sicherheitsereignisse generieren, und diese Ereignisse in einer Sicherheits-Datenbank gespeichert werden

EP 3 252 550 B1 zeigt eine modulare Sicherheits-Steuerungseinrichtung zur Steuerung eines Geräts oder einer Anlage, wobei die modulare Sicherheits-Steuerungseinrichtung ein Steuerungs-Grundgerät sowie ein Sicherheitsmodul umfasst, wobei das Sicherheitsmodul vermittels einer Datenverbindung über eine Datenschnittstelle mit dem Steuerungs-Grundgerät verbunden ist.

Gemäß dem Stand der Technik werden Prozesse auf unterschiedlichen Servern ausgeführt und sodann werden differenzierte Messergebnisse auf einer weiteren, zentralisierten Komponente abgelegt. Beispielsweise kann eine sogenannte Überwachungsvorrichtung vorgesehen werden, welche disjunkte bzw. isolierte Datenspeicher aufweist. Diese isolierte bzw. getrennte Datenhaltung führt dazu, dass die entsprechenden Parameter nur mit hohem technischen Aufwand ausgewertet werden können. Hierzu muss gemäß dem Stand der Technik ein Benutzer die unterschiedlichen Daten anfordern und kann sie sodann manuell lokal auf seinem Computer zusammenführen.

Hierbei entsteht der Nachteil, dass keine globale Sicht auf die Daten erfolgt, sondern vielmehr müssen diese aufwendig einzeln übertragen werden. Dies verhindert zudem, dass die Daten tatsächlich auch in Echtzeit vorliegen. Echtzeit heißt hierbei, dass diese möglichst nah an dem Zeitpunkt der Entstehung übermittelt werden sollen. Es ist also ein Nachteil im Stand der Technik, dass die Daten erst auf einer Überwachungskomponente persistent und isoliert zwischengespeichert werden und sodann werden diese erst auf Anfrage übertragen. Dies verhindert aufgrund der isolierten Erhebung der Daten eine korrelierte Echtzeitauswertung von Hardwarekomponenten. Diese ist jedoch notwendig, da gegebenenfalls die Hardwareressourcen nicht optimal ausgelastet werden können.

Darüber hinaus ist es im Stand der Technik nachteilig, dass entsprechende Berichte, d.h. Auswertungen der entsprechenden Daten, manuell erstellt werden und somit fehleranfällig und aufwendig sind. Darüber hinaus besteht das Problem, dass sich in der isolierten Datenhaltung Schadsoftware verstecken kann. Dies kann beispielsweise dadurch erfolgen, dass ein Schadprogramm auf mehrere unterschiedliche Datenspeicher aufgeteilt wird und erst bei einem Zusammenführen wirksam wird. So ist es gemäß bekannter Verfahren möglich, dass ein Makro dadurch erstellt wird, dass unterschiedliche Datensätze aus unterschiedlichen Datenspeichern zusammengeführt werden und sodann entsteht ein Makro, das unberechtigterweise Daten auslesen und übermitteln kann.

Durch die dezentralisierte Datenhaltung bzw. die isolierte Datenhaltung mehrerer Aspekte in unterschiedlichen Datenbanken entstehen unterschiedliche Probleme. So ist es sehr aufwendig die Daten zu analysieren. Der Aufwand ergibt sich daraus, dass die Daten stets über ein Netzwerk erst angefordert werden müssen und zudem müssen unterschiedliche Datenquellen getrennt behandelt werden. Diese müssen zuerst zusammengeführt werden bzw. Anfragen werden auf die verteilten Datenspeicher aufgeteilt. Da die Daten erst angefordert werden, liegt niemals ein komplettes gesamtes Bild der Datenlage vor, sondern vielmehr entstehen zwischen den Anforderungszeitpunkten bzw. nach einem Zeitpunkt eine Anforderung Lücken, die datentechnisch nicht berücksichtigt werden können (sog. "point-in-time" Betrachtung). D.h. also dass die Daten nur bis zu einem solchen Zeitpunkt vorliegen, an dem die Daten angefordert wurden. Danach nicht mehr.

Darüber hinaus weisen die verteilten Datenhaltungen das Problem auf, dass die Datensätze unterschiedliche Identifikatoren bzw. Kennungen aufweisen. D.h. also, dass in einer relationalen Datenbank beispielsweise die Zeilen und Spalten in den einzelnen Tabellen unterschiedlich benannt sind. Hierzu dienen unterschiedliche Datentypen. Diese heterogenen Datentypen zusammenzuführen bedeutet erneut Aufwand. Insgesamt ergibt sich also aus technischer Sicht aus dem Stand der Technik der Nachteil, dass unterschiedliche Systemressourcen über die Maßen beansprucht werden. Beispielsweise entsteht ein erhöhter Datentransfer über das Computernetzwerk, da die Daten stets von einzelnen Nutzern jeweils eingefordert werden müssen. Darüber hinaus wird mehr Rechenleistung konsumiert, da die Daten dezentral gehalten werden. Zudem müssen die Daten verteilt ausgelesen werden und sodann werden bei einem Anzeigen der unterschiedlichen Datenentwicklung jeweils eigene technische Ressourcen belegt. Liegen beispielsweise fünf Datenspeicher vor, so müssen ebendiese fünf Datenspeicher gesondert überwacht werden und bei einer Anzeige an den Benutzer müssen eben auch fünf Graphen präsentiert werden. In Abhängigkeit einer Aktualisierungsrate variiert dann ebenfalls der technische Aufwand.

Es ist daher eine Aufgabe ein Verfahren vorzuschlagen, welches es ermöglicht, dass unterschiedliche Protokollierungsdaten auch bei einer Zwischenspeicherung in Echtzeit vorliegen, derart, dass ebenfalls möglichst in Echtzeit eine Evaluierung aller Daten möglich ist. Das vorgeschlagene Verfahren soll möglichst mit geringem technischen Aufwand durchführbar sein und soll zudem Rückschlüsse darauf schließen lassen, wie ausgehend von den protokollierten Datensätzen eine Optimierung des Systemverhaltens möglich ist. Ferner ist es eine Aufgabe der vorliegenden Erfindung eine entsprechend eingerichtete Vorrichtung sowie eine Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Vorrichtung und Anordnung betreiben. Ferner ist es eine Aufgabe der vorliegenden Erfindung eine entsprechend eingerichtete Vorrichtung bereitzustellen. Ferner soll ein Computerprogrammprodukt bereitgestellt werden, welches Steuerbefehle vorhält, welche das Verfahren implementieren beziehungsweise die vorgeschlagene Vorrichtung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum sicheren und effizienten Betreiben einer Systemanordnung zur Prozessoptimierung unter Verwendung eines kontinuierlichen Datenstroms vorgeschlagen, aufweisend ein Abspeichern von disjunkten Protokollierungsdatensätzen in mehreren Datenspeichern einer Überwachungsvorrichtung, wobei für vordefinierte Klassen von Protokollierungsdaten jeweils ein separater Datenspeicher in der Überwachungsvorrichtung vorgesehen ist; ein netzwerktechnisches Übermitteln aller abgespeicherten Protokollierungsdatensätze von der Überwachungsvorrichtung an einen Konsolidierungsdatenspeicher einer Konsolidierungsvorrichtung mittels mindestens eines kontinuierlichen Datenstroms; und ein Zuweisen einer Evaluierungskennung in der Konsolidierungsvorrichtung in Abhängigkeit eines Vergleichens eines ersten Teils von Protokollierungsdatensätzen mit mindestens einem zweiten Teil von Protokollierungsdatensätzen gemäß einer vordefinierten und abgespeicherten Evaluierungsmetrik.

Das vorgeschlagene Verfahren ist sicher, da eine zentrale Datenhaltung durchgeführt wird und somit lassen sich auch entsprechende Schadprogramme einfacher identifizieren. Diese können sich also nicht in einer verteilten Datenhaltung verstecken. Darüber hinaus können aufgrund der Prozessüberwachung Abweichungen sofort automatisiert erkannt werden und entsprechende Maßnahmen ergriffen werden. So können beispielsweise Prozessausführungen derart untersucht werden, dass Parameter gemessen werden und bei unerwarteten Ergebnissen kann eine entsprechende Rückmeldung erfolgen. Darüber hinaus ist das vorgeschlagene Verfahren effizient, da die verteilte Datenhaltung in Echtzeit mittels eines kontinuierlichen Datenstroms zusammengeführt wird. Dies vermeidet es, dass entsprechender Datenverkehr für das Anfordern von den einzelnen Protokollierungsdatensätzen redundant durch einzelne Nutzer erzeugt wird, die auf dieselben Datenstämme zurück greifen.

Ein weiterer technischer Vorteil besteht darin, dass mittels des kontinuierlichen Datenstroms nicht einzelne Versionen von Datensätzen übertragen werden müssen. In herkömmlichen Verfahren muss eine Versionierung der Datenhaltung erfolgen, so dass festgestellt werden kann, welche Daten bereits übertragen wurden und welche Datensätze noch nicht übertragen wurden. Dies wird erfindungsgemäß dadurch überwunden, dass ein kontinuierlicher Datenstrom eingerichtet wird, der stets in Echtzeit die eingehenden Daten weiterleitet.

Eine Prozessoptimierung erfolgt dahingehend, dass die Prozessparameter zuerst gemessen und dann evaluiert werden. Daraufhin erfolgt das Erstellen einer Kennung, welche dazu führt, dass entsprechende Abweichungen benannt werden können und gegebenenfalls werden auch Befehle bereitgestellt, die dafür sorgen, dass die Hardware derart konfiguriert wird, dass ein vorteilhafter Prozessablauf entsteht.

Ein kontinuierlicher Datenstrom wird dadurch erzeugt, dass stets eine Verbindung vorgesehen werden kann, welche zwischen der Überwachungskomponente und der Konsolidierungskomponente besteht. Somit können in Echtzeit Daten übertragen werden und dies kann derart automatisiert erfolgen, dass diese Daten von der Überwachungskomponente an die Konsolidierungskomponente direkt weitergeleitet werden. Somit ist auch eine aufwändige Signalisierung nicht notwendig, sondern vielmehr ist es erfindungsgemäß möglich, dass ein stetiger Datenkanal eingerichtet wird.

Ein weiterer Vorteil des kontinuierlichen Datenstroms ist es, dass nicht stets eine Verbindung aufgebaut werden muss, sondern vielmehr ist es erfindungsgemäß möglich, dass einmalig eine Verbindung zwischen Sender und Empfänger eingerichtet wird und diese wird sodann permanent genutzt. Darüber hinaus ist es möglich, dass, falls keine Datensätze erkannt wurden, Fülldaten übermittelt werden. Hierdurch kann ebenfalls der Datenkanal aufrechterhalten werden und sobald tatsächliche Daten vorliegen, können diese sofort ohne einen Verbindungsaufbau in Echtzeit übertragen werden.

Echtzeit heißt generell, dass aus Sicht des Benutzers keine erkennbare Verzögerung entsteht, auch wenn diese technisch notwendig ist.

In einem vorbereiteten Verfahrensschritt erfolgt ein Abspeichern von disjunkten Protokollierungsdatensätzen in mehreren Datenspeichern. Disjunkte Datensätze entstehen dadurch, dass unterschiedliche Aspekte gemäß vordefinierten Klassen abgespeichert bzw. protokolliert werden. So kann beispielsweise ein Fehler in einem anderen Datenspeicher abgespeichert werden als eine Änderung in der Hardwarekonfiguration. Gemäß dem Stand der Technik sind hierzu unterschiedliche Datenspeicher vorzusehen, was erfindungsgemäß aufgenommen und erweitert wird. So kann das Verfahren bekannte Verfahren mit einbeziehen, die entsprechende Datensätze in unterschiedlichen Datenspeichern einer Überwachungsvorrichtung bereitstellen.

Vordefinierte Klassen von Protokollierungsdaten sind beispielsweise gewisse Systemereignisse bzw. ein Wechsel in der Hardware- oder Prozesskonfiguration. Zudem können Probleme protokolliert werden oder aber gewisse Systemanfragen bzw. Dienstanfragen. Diese werden alle in unterschiedlichen Datenbanken bzw. Datenspeichern der Überwachungskomponente abgelegt.

Sodann erfolgt ein netzwerktechnisches Übermitteln aller abgespeicherten Protokollierungsdatensätze von der Überwachungsvorrichtung an einen Konsolidierungsdatenspeicher. Dies impliziert also, dass die Überwachungskomponente und die Konsolidierungskomponente nicht in einem Gerät einstückig verbaut sind, sondern vielmehr sind diese mittels weiterer Netzwerkkomponenten netzwerktechnisch verbunden. Beispielsweise kann die Datenübertragung über das Internet erfolgen. Hierzu wird ein kontinuierlicher Datenstrom eingerichtet.

Der erfindungsgemäße Vorteil ist hierbei, dass alle Datenspeicher mit allen Klassen von Protokollierungsdaten, d.h. also alle Protokollierungsdatensätze, sofort und unmittelbar an die Konsolidierungsvorrichtung übertragen werden. Alle Datensätze werden somit zentral gespeichert und es ist möglich, diese global zu verarbeiten, d.h. also dass nicht auf die einzelnen Datenspeicher zugegriffen werden muss, sondern vielmehr liegen alle Datensätze nunmehr in einem zentralen Datenspeicher vor. Dies erspart technischen Aufwand bezüglich der Anforderung von Datensätzen, der redundanten Übertragung von Datensätzen sowie den Rechenaufwand, der dadurch entsteht, dass auf die unterschiedlichen Datenspeicher ansonsten zugegriffen werden müssten.

Sodann erfolgt ein Zuweisen einer Evaluierungskennung in der Konsolidierungsvorrichtung in Abhängigkeit eines Vergleichens eines ersten Teils von Protokollierungsdatensätzen mit mindestens einem zweiten Teil von Protokollierungsdatensätzen. Dies erfolgt derart, dass in vorbereitenden Schritten definiert werden soll, was der erste Teil an Datensätzen ist und was der zweite Teil an Datensätzen. Der erste Teil kann in einem Testlauf derart erstellt werden, dass eine Vielzahl von Prozessverläufen ausgeführt wird und die entsprechenden Datensätze werden über die Überwachungskomponente an die Konsolidierungskomponente übermittelt. Der erste Teil stellt also einen Datenbestand dar, aus dem sich bestimmte Verhaltensweisen und Systemparameter ableiten lassen. Aufgrund der Mehrzahl von Datensätzen kann dann davon ausgegangen werden, dass hier im Mittel der Normalfall vorliegt.

Nunmehr können weitere Datensätze gesammelt werden und diese in einem zweiten Teil der Datensätze zusammengefasst werden. Wird nunmehr der zweite Teil der Datensätze mit dem ersten Teil verglichen, so kann ein aktuell ausgeführter Prozess, der den zweiten Teil an Datensätze liefert, mit der Vielzahl an Datensätzen aus dem ersten Teil verglichen werden. Hieraus lassen sich Anomalien ableiten.

Typischerweise wird ein neu ausgeführter Prozess, der von der Überwachungskomponente mitprotokolliert wird gemäß den Verhaltensregeln des ersten Teils an Datensätzen ausgeführt. Ist dies nicht der Fall, so kann ein Fehler vorliegen. Es kann aber auch bedeuten, dass lediglich die Systemparameter nicht optimal eingestellt sind und sodann kann eine Rückkopplung derart erfolgen, dass der zweite Teil an Datensätzen so erzeugt wird, dass er dem ersten Teil entspricht.

Hierzu kann in der Metrik abgespeichert werden, unter welchen Voraussetzungen gewisse Datensätze erzeugt wurden. Wird dieser Fall als Norm bzw. als gut beurteilt, was ebenfalls in der Metrik abgespeichert wird, so kann die entsprechende Systemkonfiguration eben auch als Normalfall zu Grunde gelegt werden. Gibt es nunmehr in der Ausführung der Prozesse Abweichungen, so kann wiederum die aktuelle Hardwarekonfiguration bzw. Prozesskonfiguration derart eingestellt werden, dass wiederum die ursprünglich zu erwartenden Datensätze generiert werden.

Das System wird als selbstlernendes System aufgebaut und erkennt automatisch, ob neue Komponenten zur Überwachung hinzugefügt wurden. Diese Komponenten werden ab dem Zeitpunkt ihrer erstmaligen Entdeckung entsprechend der bisher evaluierten Fälle beurteilt und Abweichungen werden direkt erkannt und gemäß vorliegender Metrik behandelt.

Auf diese Art und Weise ist es möglich, eine Art Feedbackschleife zu implementieren, sodass die Evaluierungsergebnisse in die Hardwarekomponenten zurück gespielt werden und die Hardwarekomponenten derart konfiguriert werden, dass der gewünschte Effekt eintritt.

Die Evaluierungsmetrik wird vordefiniert und abgespeichert. D.h. also dass beispielsweise empirisch ermittelt wird, wie welche Datensätze zusammen hängen und ob diese das gewünschte Ergebnis liefern.

Um die abstrakte Beschreibung zu veranschaulichen wird im Folgenden ein Beispiel geliefert:
In dem vorliegenden Beispiel werden fünf Klassen definiert, die Datensätze erzeugen die also in der Überwachungskomponente fünf Datenbanken bzw.

Datenspeicher implizieren. Die fünf Klassen können zum Beispiel Metadaten über Prozesse enthalten bzw. die Systemumgebung in denen die Prozesse ausgeführt werden. In dem vorliegenden Beispiel werden die Klassen definiert als eine Auslastung des Prozessors, eine Speicherauslastung, ein Auftreten von Problemen, eine Dienstanfrage und ein Laufzeitverhalten. Somit werden also diese fünf Klassen von einer Vielzahl von Servern abgefragt und bei entsprechender Ausführung von Prozessen werden diese Klassen mitprotokolliert. Hierdurch entstehen Protokollierungsdatensätze, die in der entsprechenden Datenbank bzw. dem Datenspeicher abgelegt werden.

Nunmehr werden zehn Prozesse ausgeführt und entsprechende Ergebnisse werden mitprotokolliert und sodann werden die Datensätze in einem fünfdimensionalen Datenraum angeordnet. Da ein Prozess zehnmal ausgeführt wird, ergibt sich eine Datenwolke in einem fünfdimensionalen Datenraum mit zehn Punkten. Dies sind vorbereitende Schritte und diese Datenwolke soll den Normalzustand definieren.

Wird nun ein elfter Prozess ausgeführt, der evaluiert werden soll, so wird das gleiche Procedere durchlaufen und ein elfter Datenpunkt wird in dem Koordinatensystem eingetragen. Nunmehr kann die Evaluierungsmetrik definieren, wann der elfte Datenpunkt zu der Datenwolke zugehörig ist und wann nicht. Hierbei kann ein Clustering bzw. eine Klassifizierung erfolgen bzw. es kann ein Abstandsmaß definiert werden, welches angibt, wann ein Datenpunkt noch zu der Datenwolke gehört und wann nicht. Nun können die unterschiedlichen Parameter verglichen werden und es kann definiert werden, welche Systemverhaltensweisen als normal definiert werden und welche nicht. Konkret kann also der elfte Datenpunkt in seiner Lage zu der Datenwolke evaluiert werden. Somit kann auch diesem elften Datenpunkt eine Evaluierungskennung zugewiesen werden. Dies kann derart erfolgen, dass eine Interpretation des elften Datenpunkt erfolgt, wobei auch eine numerische Bewertung gemäß einem Punktesystem erfolgen kann oder aber eine Leistungsmessung kann zum Ausdruck gebracht werden. Beispielsweise kann die Evaluierungskennung "normal" lauten. Es kann aber auch sein, dass die Evaluierungskennung einen gewissen Code ausgibt, der angibt, wie das System zu konfigurieren ist. Beispielsweise kann die Evaluierungskennung darauf lauten, dass die Systemkonfiguration drei einzustellen ist. Auf diese Art und Weise kann anhand des Vergleichens festgestellt werden, wie nunmehr die Hardwarekomponenten einzustellen sind.

Wie nunmehr die einzelnen Protokollierungsdatensätze verglichen werden, ist Teil der Evaluierungsmetrik. Der Fachmann erkennt hier weitere Möglichkeiten wie solche Vergleichsregeln durchzuführen sind. Beispielsweise kann auch eine eins zu eins Vergleichsoperation auf den einzelnen Datensätzen erfolgen. Darüber hinaus können Oberwerte definiert werden, welche nicht überschritten werden dürfen bzw. Unterwerte, die mindestens erfüllt werden müssen. Entsprechende Grenzen bzw. Abstände zu einem Normalpunkt sind ebenfalls Teil der Evaluierungsmetrik. Diese sind vom Einzelfall abhängig und können hier nicht erschöpfend aufgeführt werden.

Gemäß einem Aspekt der vorliegenden Erfindung erfolgt ein Zuweisen und Abspeichern einer eindeutigen Kennung zu jeweils jedem Protokollierungsdatensatz zur Vermeidung von Kollisionen von Kennungen. Dies hat den Vorteil, dass unterschiedliche Kennungen der aus der Überwachungsvorrichtung angeglichen werden und somit kann eine einfachere, also effizientere, Verarbeitung stattfinden. Jedem Protokollierungsdatensatz wird eine eindeutige Kennung zugewiesen, weshalb nach diesem Schritt nicht mehr unterschiedliche Kennungen zu verarbeiten sind.

Gemäß einem weiteren Aspekt der vorliegenden Erfindung wird die eindeutige Kennung derart gewählt, dass die Architektur der Konsolidierungsvorrichtung hardwaretechnisch auf deren Verarbeitung optimiert ist. Dies hat den Vorteil, dass die Kennung so gewählt werden kann, dass diese effizient abgespeichert und verarbeitet werden kann. Hier kann die Kennung so gewählt werden, dass ein bestimmter Datentyp gewählt wird oder bestimmte Konventionen erfüllt sind. Liegt ein beispielsweise ein 32 bit System vor, so kann eben ein 64 bit Datentyp vermieden werden und es wird ein 32 bit Datenformat gewählt. Somit interagieren Hardware und Software optimal, was im Stand der Technik bereits dadurch vermieden wird, dass unterschiedliche Kennungen und daher Datentypen vorherrschen.

Gemäß einem weiteren Aspekt der vorliegenden Erfindung werden die disjunkten Datensätze in der Überwachungsvorrichtung in möglichen Kombinationen auf Schadbefehle überprüft. Dies hat den Vorteil, dass nicht nur einzelne Datensätze auf Schadbefehle untersucht werden, sondern es wird auch verhindert, dass in der Konsolidierungsvorrichtung Datensätze derart zusammengesetzt werden können, dass ein Schadbefehl entsteht. So kann es vermieden werden, dass durch die einzelnen Datensätze in Kombination ein Makro geschaffen wird, der Daten unberechtigt ausliest und weitergibt. Unter Schadbefehlen werden insgesamt alle Anweisungen verstanden, die unberechtigte Operationen alleine oder im Zusammenwirken mit anderen Befehlen ausführen.

Gemäß einem weiteren Aspekt der vorliegenden Erfindung bilden die Protokollierungsdatensätze Hardwareparameter und/ oder Laufzeitverhalten von Komponenten ab, welche netzwerktechnisch mit der Überwachungsvorrichtung gekoppelt sind. Dies hat den Vorteil, dass in der Überwachungsvorrichtung externe Komponenten überwacht werden und diese ihre Daten derart an die Überwachungsvorrichtung liefern, dass diese dort protokolliert werden können. Bei den externen Geräten kann es sich beispielsweise um Server oder generell Recheneinheiten handeln. Hardwareparameter sind verfügbarer Speicherplatz, Systemressourcen oder Konfigurationen, unter anderem. Laufzeitverhalten kann auf die Hardwareressourcen an sich abstellen aber auch auf physikalische Parameter wie zum Beispiel Wärmeentwicklung.

Gemäß einem weiteren Aspekt der vorliegenden Erfindung übermittelt der mindestens eine kontinuierliche Datenstrom bei einem Vorliegen neuer Protokollierungsdatensätze diese proaktiv an den Konsolidierungsdatenspeicher. Dies hat den Vorteil, dass ein Push Mechanismus implementiert wird, bei dem die Daten bei Vorhandensein unmittelbar, also in Echtzeit, an die Konsolidierungsvorrichtung übermittelt werden. Somit liegen dort stets die Daten vor und müssen nicht per Pull angefordert werden, wie dies der Stand der Technik vornimmt.

Gemäß einem weiteren Aspekt der vorliegenden Erfindung bilden die Protokollierungsdatensätze eine Auswahl an technischen Parametern von Hardwarekomponenten ab. Die Auswahl umfasst Laufzeiten, Prozessorauslastung, Speicherauslastung, Wiederholraten, Fehler, Änderungen, Konfigurationen, Temperaturen, verfügbare Ressourcen und/ oder Verhalten. Dies hat den Vorteil, dass die Überwachungsvorrichtung alle möglichen Parameter abspeichern kann und diese sodann übermittelt werden können. Somit kann ein Laufzeitverhalten vollumfänglich gemessen werden. Es können nicht nur Prozesse an sich inhaltlich überwacht werden, sondern vielmehr kann auch die Hardware bzw. deren Verhalten überwacht und protokolliert werden.

Gemäß einem weiteren Aspekt der vorliegenden Erfindung werden anhand des Vergleichens Abweichungen in dem ersten Teil von Protokollierungsdatensätzen von dem zweiten Teil von Protokollierungsdatensätzen identifiziert, so dass eine zeitliche Entwicklung der Protokollierungsdatensätze identifiziert werden kann. Dies hat den Vorteil, dass zum Beispiel ältere Daten mit neueren Verglichen werden können und somit können Anomalien identifiziert werden. Wird ein Prozess mehrfach ausgeführt, so können Daten der ersten Ausführung mit Daten der zweiten Ausführung verglichen werden und somit kann eine Abweichung festgestellt werden. Auch ist es möglich, eine Mehrzahl an Prozessausführungen mit einer einzigen zu Vergleichen und hieraus Abweichungen von der Erwartung zu identifizieren. Protokollierungsdatensätze können per Klassen verglichen werden und die Protokollierungsdatensätze können beliebig partitioniert werden.

Gemäß einem weiteren Aspekt der vorliegenden Erfindung gibt die Evaluierungsmetrik vor, wie die Protokollierungsdatensätze zu vergleichen sind und stellt hierzu eine Mehrzahl von Regeln und Kennzahlen bereit, die Mehrzahl aufweisend Vergleichsregeln, Zielzahlen, Ist-Zahlen, Soll-Zahlen, Zeiteinheiten, technische Parameter, Abweichungen, Toleranzbereiche, technische Konfigurationen, Laufzeiten, technischer Aufwand, statistische Verfahren, mathematische Verfahren, Wahrscheinlichkeitsberechnungen, Metrikparameter und/ oder Metrikregeln. Dies hat den Vorteil, dass vorab spezifiziert werden kann, welche Vergleiche durchgeführt werden sollen und was gemessen werden soll. Da in der Konsolidierungsvorrichtung alle Daten vorliegen und nicht disjunkte Datensätze, die erst kombiniert werden müssen, lässt sich eine globale Auswertung durchführen und es können beispielsweise einzelne Klassen vergleichen werden. Es können auch Datensätze aus unterschiedlichen Klassen verglichen werden. Die Regeln zeigen an, was Ausgangsdatensätze sind, welche Operatoren darauf angewendet werden und optional wie das Ergebnis weiterverarbeitet werden soll. So können beispielsweise alle Hardwareparameter einbezogen werden, eine Gewichtung auf eine Hardwarekomponente erfolgen, und sodann die effizienteste Instanz einer Prozessausführung identifiziert werden. Beispielsweise kann eine CPU-Belegung höher gewichtet werden, falls genügend Speicher vorhanden ist. Dann werden alle Laufzeitparameter verglichen und es wird diejenige Prozessausführung identifiziert, die bzgl. der Prozessorauslastung optimiert ist.

Die Evaluierungskennung stellt mindestens einen Steuerbefehl, einen Zahlenwert, einen alphanumerischen Wert und/ oder einen Identifikator bereit, und die Evaluierungskennung wurde vorab empirisch möglichen Vergleichsergebnissen zugeordnet. Dies hat den Vorteil, dass vorab empirisch Testläufe durchgeführt werden können und diese Ergebnisse werden ausgewertet. Somit können Testergebnisse in einem Parameterraum angeordnet werden und bei tatsächlichen Prozessausführungen kann identifiziert werden, welche Evaluierungskennung am ehesten dem Ergebnis entspricht. Beispielsweise kann eine Punktezahl, bzw. ein Score, bei einer bestimmten Belegung der Protokollierungsdatensätze bei Testläufen vergeben werden. Dieser kann in drei Stufen, gut, mittel, schlecht, bzw. als prozentuale Abweichung vom Sollwert unterteilt werden. Werden in einem tatsächlichen Prozessverlauf Protokollierungsdatensätze erzeugt und mit vorab identifizierten Protokollierungsdatensätzen verglichen, so kann das Ergebnis der Evaluierungskennung "mittel" entsprechen. Der Evaluierungskennung kann auch eine Handlungsanleitung beigefügt sein, beispielsweise wie das Ergebnis an die gemessenen Komponenten derart kommuniziert sind, dass diese zur effizienteren Ausführung konfiguriert werden, so dass ein Score "gut" bzw. X% entsteht.

Gemäß einem weiteren Aspekt der vorliegenden Erfindung werden in Abhängigkeit der Evaluierungskennung technische Komponenten angesteuert, die die Protokollierungsdatensätze erzeugt haben. Dies hat den Vorteil, dass eine Rückkopplung von den gemessenen Protokollierungsdatensätzen über deren Auswertung bis hin zur Handlungsanweisung an die gemessenen Komponenten erfolgt. Wie die Handlungsanweisung bzw. Konfiguration erfolgt bestimmt die Evaluierungskennung bzw. die Metrik.

Die Aufgabe wird auch gelöst durch eine Konsolidierungsvorrichtung, welche zumindest einen Teil der vorgenannten Schritte ausführen kann oder in der vorgeschlagenen Systemanordnung Verwendung finden kann.

Die Aufgabe wird des Weiteren gelöst durch eine Systemanordnung zur Prozessoptimierung und Überwachung unter Verwendung eines kontinuierlichen Datenstroms, aufweisend eine Überwachungsvorrichtung eingerichtet zum Abspeichern von disjunkten Protokollierungsdatensätzen in mehreren Datenspeichern, wobei für vordefinierte Klassen von Protokollierungsdaten jeweils ein separater Datenspeicher in der Überwachungsvorrichtung vorgesehen ist; mindestens eine Schnittstelleneinheit eingerichtet zum netzwerktechnischen Übermitteln aller abgespeicherten Protokollierungsdatensätze von der Überwachungsvorrichtung an einen Konsolidierungsdatenspeicher einer Konsolidierungsvorrichtung mittels mindestens eines kontinuierlichen Datenstroms; und eine Recheneinheit eingerichtet zum Zuweisen einer Evaluierungskennung in der Konsolidierungsvorrichtung in Abhängigkeit eines Vergleichens eines ersten Teils von Protokollierungsdatensätzen mit mindestens einem zweiten Teil von Protokollierungsdatensätzen gemäß einer vordefinierten und abgespeicherten Evaluierungsmetrik.

Die Aufgabe wird auch gelöst durch ein Computerprogrammprodukt und Speichermedium mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung; und
- Figur 2:: ein schematisches Blockschaltbild der vorgeschlagenen Systemanordnung gemäß einem Aspekt der vorliegenden Erfindung.

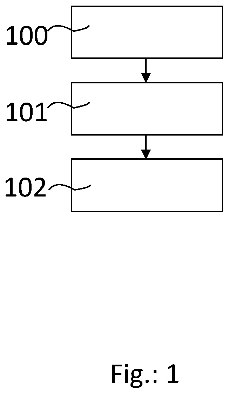

Figur 1 zeigt in einem schematischen Ablaufdiagramm ein Verfahren zum sicheren und effizienten Betreiben einer Systemanordnung zur Prozessoptimierung unter Verwendung eines kontinuierlichen Datenstroms, aufweisend ein Abspeichern 100 von disjunkten Protokollierungsdatensätzen in mehreren Datenspeichern DB0; DB1; ...; DBn einer Überwachungsvorrichtung M, wobei für vordefinierte Klasse von Protokollierungsdaten jeweils ein separater Datenspeicher DB0; DB1; ...; DBn in der Überwachungsvorrichtung M vorgesehen ist; ein netzwerktechnisches Übermitteln 101 aller abgespeicherten Protokollierungsdatensätze von der Überwachungsvorrichtung M an einen Konsolidierungsdatenspeicher KDB einer Konsolidierungsvorrichtung K mittels mindestens eines kontinuierlichen Datenstroms; und ein Zuweisen 102 einer Evaluierungskennung in der Konsolidierungsvorrichtung K in Abhängigkeit eines Vergleichens eines ersten Teils von Protokollierungsdatensätzen mit mindestens einem zweiten Teil von Protokollierungsdatensätzen gemäß einer vordefinierten und abgespeicherten Evaluierungsmetrik.

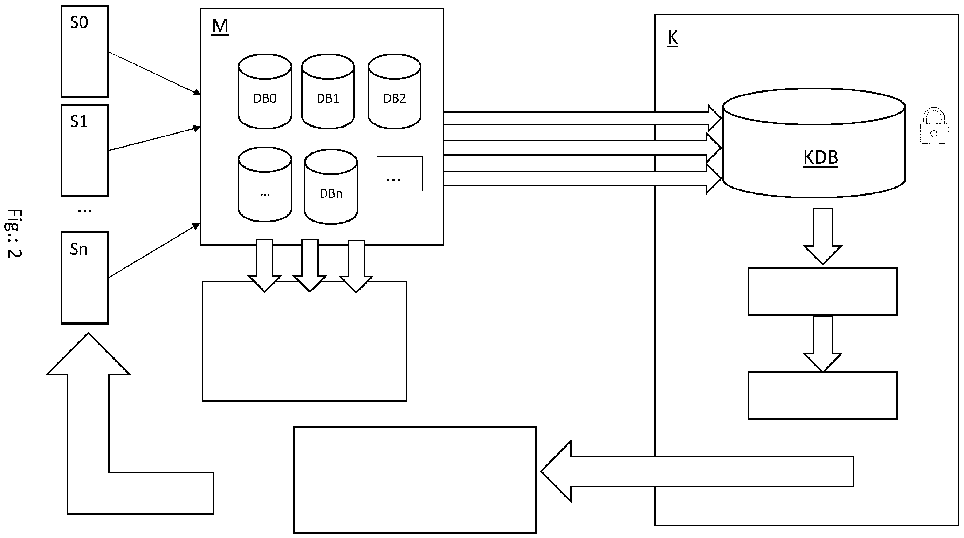

Die vorliegende Figur 2 zeigt in einem schematischen Blockschaltbild die vorgeschlagene Systemanordnung bzw. die vorgeschlagene Konsolidierungsvorrichtung. Auf der linken Seite sind unterschiedliche Server eingezeichnet, die alle Prozesse ausführen. Diese Prozesse werden überwacht und sodann werden die entsprechenden generierten Datensätze an die Überwachungskomponente bzw. Monitoringkomponente M übermittelt. Somit sind unterschiedliche Datenspeicher bzw. Datenbanken DB0, DB1, ..., DBn vorhanden, die entsprechende Metadaten, also Daten über die Prozessausführungen, abspeichern. Hierbei kann es sich um Ergebnisse oder technische Parameter handeln, die bei der Ausführung von Prozessen entstehen. Dies können zum Beispiel bestimmte Laufzeiten von Prozessen sein. Jede vordefinierte Klasse von Datensätzen hat einen eigenen Datenspeicher, so dass die unterschiedlichen Daten jeweils in isolierter Datenhaltung abgespeichert werden.

Erfindungsgemäß ist es nunmehr vorgesehen, dass mindestens ein kontinuierlicher Datenstrom zur Konsolidierungsvorrichtung K aufgebaut wird, wie es die drei Pfeile von der Überwachungsvorrichtung M zur Konsolidierungsvorrichtung K zeigen. Hierüber werden proaktiv, d.h. also aufgrund eines Push Mechanismus die Datensätze in eine zentrale Datenbank KDB übertragen. Hier werden die Daten entsprechend gesichert bzw. auf Schadsoftware überprüft. Wie die darunterliegenden Pfeile verdeutlichen, kann die Konsolidierungsvorrichtung unterschiedliche Einheiten aufweisen, welche die Datensätze auswerten. So können Abhängigkeiten zwischen den einzelnen Daten aufgedeckt werden bzw. die unterschiedlichen Datensätze können miteinander verglichen werden.

Bei den beiden Kästen unterhalb der Datenbank handelt es sich somit um Recheneinheiten, die beispielsweise die Datensätze vergleichen, bzw. eine abgespeicherte Vergleichsmetrik anwenden und sodann die Datensätze auswerten. Entsprechende Ergebnisse können sodann aus der Konsolidierungsvorrichtung K ausgegeben werden, was der untere Pfeil von rechts nach links andeutet. Die entsprechenden Berichte können sodann als Handlungsanweisung bzw. Konfigurationseinstellung für die Server dienen, was der Pfeil links unten bedeutet. Somit können also die gewonnenen Informationen zur Systemsteuerung zurück gespielt werden und die Schleife beginnt erneut.

Die drei Pfeile von der Überwachungsvorrichtung M nach unten spiegeln lediglich wider, dass auch ein manuelles Auswerten erfolgen kann, wie es der Stand der Technik zeigt. Erfindungsgemäß sind die drei Pfeile nach rechts vorgesehen, wo eine automatisierte Auswertung erfolgt.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

## Patentansprüche

1. Verfahren zum sicheren und effizienten Betreiben einer Systemanordnung zur Prozessoptimierung unter Verwendung eines kontinuierlichen Datenstroms, aufweisend:
- ein Abspeichern (100) von disjunkten Protokollierungsdatensätzen in mehreren Datenspeichern (DBO; DB1; ...; DBn) einer Überwachungsvorrichtung (M), wobei für vordefinierte Klasse von Protokollierungsdaten jeweils ein separater Datenspeicher (DBO; DB1; ...; DBn) in der Überwachungsvorrichtung (M) vorgesehen ist;
- ein netzwerktechnisches Übermitteln (101) aller abgespeicherten Protokollierungsdatensätze von der Überwachungsvorrichtung (M) an einen Konsolidierungsdatenspeicher (KDB) einer Konsolidierungsvorrichtung (K) mittels mindestens eines kontinuierlichen Datenstroms; und
- ein Zuweisen (102) einer Evaluierungskennung in der Konsolidierungsvorrichtung (K) in Abhängigkeit eines Vergleichens eines ersten Teils von Protokollierungsdatensätzen mit mindestens einem zweiten Teil von Protokollierungsdatensätzen gemäß einer vordefinierten und abgespeicherten Evaluierungsmetrik, **dadurch gekennzeichnet, dass**
- das Zuweisen (102) der Evaluierungskennung an das Evaluierungsergebnis erfolgt und in Abhängigkeit der Evaluierungskennung technische Komponenten angesteuert werden, die die Protokollierungsdatensätze erzeugt haben, wobei anhand des Vergleichens Abweichungen in dem ersten Teil von Protokollierungsdatensätzen von dem zweiten Teil von Protokollierungsdatensätzen identifiziert werden, so dass eine zeitliche Entwicklung der Protokollierungsdatensätze identifiziert werden kann, und
- die Evaluierungskennung mindestens einen Steuerbefehl, einen Zahlenwert, einen alphanumerischen Wert und/oder einen Identifikator bereitstellt, und die Evaluierungskennung vorab empirisch möglichen Vergleichsergebnissen zugeordnet wurde.

2. Verfahren nach Anspruch 1, **dadurch gekennzeichnet, dass** ein Zuweisen und Abspeichern einer eindeutigen Kennung zu jeweils jedem Protokollierungsdatensatz zur Vermeidung von Kollisionen von Kennungen erfolgt.

3. Verfahren nach einem der vorhergehenden Ansprüche, **dadurch gekennzeichnet, dass** die disjunkten Datensätze in der Überwachungsvorrichtung (M) in möglichen Kombinationen auf Schadbefehle überprüft werden.

4. Verfahren nach einem der vorhergehenden Ansprüche, **dadurch gekennzeichnet, dass** die Protokollierungsdatensätze Hardwareparameter und/ oder Laufzeitverhalten von Komponenten abbilden, welche netzwerktechnisch mit der Überwachungsvorrichtung (M) gekoppelt sind.

5. Verfahren nach einem der vorhergehenden Ansprüche, **dadurch gekennzeichnet, dass** der mindestens eine kontinuierliche Datenstrom bei einem Vorliegen neuer Protokollierungsdatensätze diese proaktiv an den Konsolidierungsdatenspeicher (KDB) übermittelt.

6. Verfahren nach einem der vorhergehenden Ansprüche, **dadurch gekennzeichnet, dass** die Protokollierungsdatensätze eine Auswahl an technischen Parametern von Hardwarekomponenten abbilden, die Auswahl umfassend Laufzeiten, Prozessorauslastung, Speicherauslastung, Wiederholraten, Fehler, Änderungen, Konfigurationen, Temperaturen, verfügbare Ressourcen und/ oder Verhalten.

7. Verfahren nach einem der vorhergehenden Ansprüche, **dadurch gekennzeichnet, dass** die Evaluierungsmetrik vorgibt, wie die Protokollierungsdatensätze zu vergleichen sind und hierzu eine Mehrzahl von Regeln und Kennzahlen bereitstellt, die Mehrzahl aufweisend Vergleichsregeln, Zielzahlen, Ist-Zahlen, Soll-Zahlen, Zeiteinheiten, technische Parameter, Abweichungen, Toleranzbereiche, technische Konfigurationen, Laufzeiten, technischer Aufwand, statistische Verfahren, mathematische Verfahren, Wahrscheinlichkeitsberechnungen, Metrikparameter und/ oder Metrikregeln.

8. Konsolidierungsvorrichtung (K) eingerichtet zur Verwendung in dem Verfahren gemäß einem der Ansprüche 1 bis 8.

9. Systemanordnung zur Prozessoptimierung und Überwachung unter Verwendung eines kontinuierlichen Datenstroms, aufweisend:
- eine Überwachungsvorrichtung (M) eingerichtet zum Abspeichern von disjunkten Protokollierungsdatensätzen in mehreren Datenspeichern (DBO; DB1; ...; DBn), wobei für vordefinierte Klasse von Protokollierungsdaten jeweils ein separater Datenspeicher (DBO; DB1; ...; DBn) in der Überwachungsvorrichtung (M) vorgesehen ist;
- mindestens eine Schnittstelleneinheit eingerichtet zum netzwerktechnischen Übermitteln aller abgespeicherten Protokollierungsdatensätze von der Überwachungsvorrichtung (M) an einen Konsolidierungsdatenspeicher (KDB) einer Konsolidierungsvorrichtung (K) mittels mindestens eines kontinuierlichen Datenstroms; und
- eine Recheneinheit eingerichtet zum Zuweisen einer Evaluierungskennung in der Konsolidierungsvorrichtung (K) in Abhängigkeit eines Vergleichens eines ersten Teils von Protokollierungsdatensätzen mit mindestens einem zweiten Teil von Protokollierungsdatensätzen gemäß einer vordefinierten und abgespeicherten Evaluierungsmetrik, **dadurch gekennzeichnet, dass**
- das Zuweisen (102) der Evaluierungskennung an das Evaluierungsergebnis erfolgt und in Abhängigkeit der Evaluierungskennung technische Komponenten angesteuert werden, die die Protokollierungsdatensätze erzeugt haben, wobei anhand des Vergleichens Abweichungen in dem ersten Teil von Protokollierungsdatensätzen von dem zweiten Teil von Protokollierungsdatensätzen identifiziert werden, so dass eine zeitliche Entwicklung der Protokollierungsdatensätze identifiziert werden kann, und
- die Evaluierungskennung mindestens einen Steuerbefehl, einen Zahlenwert, einen alphanumerischen Wert und/oder einen Identifikator bereitstellt, und die Evaluierungskennung vorab empirisch möglichen Vergleichsergebnissen zugeordnet wurde.

10. Computerprogrammprodukt, umfassend Befehle, die bei der Ausführung des Programms durch mindestens einen Computer diesen veranlassen, die Schritte des Verfahrens nach einem der Ansprüche 1 bis 8 auszuführen.

11. Computerlesbares Speichermedium, umfassend Befehle, die bei der Ausführung durch mindestens einen Computer diesen veranlassen, die Schritte des Verfahrens nach einem der Ansprüche 1 bis 8 auszuführen.

## Claims

1. A method for the safe and efficient operation of a system arrangement for process optimisation using a continuous data stream, comprising
- a storage (100) of disjunctive logging data records in a plurality of data memories (DBO; DB1; ...; DBn) of a monitoring device (M), wherein a separate data memory (DBO; DB1; ...; DBn) is provided in the monitoring device (M) for each predefined class of logging data;
- a network-technical transmission (101) of all stored logging data records from the monitoring device (M) to a consolidation data memory (KDB) of a consolidation device (K) by means of at least one continuous data stream; and
- an assignment (102) of an evaluation identifier in the consolidation device (K) in dependence on a comparison of a first part of logging data records with at least a second part of logging data records in accordance with a predefined and stored evaluation metric, which is **characterised in that** the assignment (102) of the evaluation identifier is made to the evaluation result and technical components are controlled in dependence on the evaluation identifier, which have generated the logging data records, deviations in the first part of logging data records from the second part of logging data records being identified on the basis of the comparison, so that a temporal development of the logging data records can be identified, and
- the evaluation identifier provides at least one control command, a numerical value, an alphanumeric value and/or an identifier, and the evaluation identifier has been empirically assigned in advance to possible comparison results.

2. The method according to claim 1, **characterised in that** a unique identifier is assigned and stored for each logging data record in order to avoid collisions of identifiers.

3. The method according to one of the preceding claims, **characterised in that** the disjoint data records in the monitoring device (M) are checked for malicious commands in possible combinations.

4. The method according to one of the preceding claims, **characterised in that** the logging data records map hardware parameters and/or runtime behaviour of components which are coupled to the monitoring device (M) in terms of network technology.

5. The method according to one of the preceding claims, **characterised in that** the at least one continuous data stream proactively transmits new logging data records to the consolidation data memory (KDB) when they become available.

6. The method according to one of the preceding claims, **characterised in that** the logging data sets map a selection of technical parameters of hardware components, the selection comprising runtimes, processor utilisation, memory utilisation, repetition rates, errors, changes, configurations, temperatures, available resources and/or behaviour.

7. The method according to one of the preceding claims, **characterised in that** the evaluation metric specifies how the logging data sets are to be compared and provides a plurality of rules and metrics for this purpose, the plurality comprising comparison rules, target numbers, actual numbers, target numbers, time units, technical parameters, deviations, tolerance ranges, technical configurations, runtimes, technical effort, statistical methods, mathematical methods, probability calculations, metric parameters and/or metric rules.

8. A consolidation device (K) adapted for use in the method according to any one of claims 1 to 8.

9. A system arrangement for process optimisation and monitoring using a continuous data stream, comprising:
- a monitoring device (M) set up for storing disjunctive logging data records in a plurality of data memories (DBO; DB1; ...; DBn), wherein a separate data memory (DBO; DB1; ...; DBn) is provided in the monitoring device (M) for each predefined class of logging data;
- at least one interface unit set up for the network transmission of all stored logging data records from the monitoring device (M) to a consolidation data memory (KDB) of a consolidation device (K) by means of at least one continuous data stream; and
- a computing unit set up for assigning an evaluation identifier in the consolidation device (K) as a function of a comparison of a first part of logging data records with at least a second part of logging data records in accordance with a predefined and stored evaluation metric, which is **characterised in that** the assignment (102) of the evaluation identifier to the evaluation result takes place and technical components are controlled as a function of the evaluation identifier, which have generated the logging data records, deviations in the first part of logging data records from the second part of logging data records being identified on the basis of the comparison, so that a temporal development of the logging data records can be identified, and
- the evaluation identifier provides at least one control command, a numerical value, an alphanumeric value and/or an identifier, and the evaluation identifier has been empirically assigned in advance to possible comparison results.

10. A computer program product comprising instructions which, when the program is executed by at least one computer, cause the computer to perform the steps of the method according to any one of claims 1 to 8.

11. A computer-readable storage medium comprising instructions which, when executed by at least one computer, cause the computer to perform the steps of the method according to any one of claims 1 to 8.

## Revendications

1. Procédé pour faire fonctionner de manière sûre et efficace un agencement de système pour l'optimisation de processus en utilisant un flux de données continu, comprenant :
- un stockage (100) d'ensembles de données de journalisation disjoints dans plusieurs mémoires de données (DBO ; DB1 ; ... ; DBn) d'un dispositif de surveillance (M), une mémoire de données séparée (DBO ; DB1 ; ... ; DBn) étant respectivement prévue dans le dispositif de surveillance (M) pour une classe prédéfinie de données de journalisation ;
- une transmission par réseau (101) de tous les enregistrements de données de journalisation stockés du dispositif de surveillance (M) à une mémoire de données de consolidation (KDB) d'un dispositif de consolidation (K) au moyen d'au moins un flux de données continu ; et
- une attribution (102) d'un identifiant d'évaluation dans le dispositif de consolidation (K) en fonction d'une comparaison d'une première partie d'ensembles de données de journalisation avec au moins une deuxième partie d'ensembles de données de journalisation selon une métrique d'évaluation prédéfinie et mémorisée, qui est **caractérisée en ce que** l'attribution (102) de l'identifiant d'évaluation a lieu au résultat de l'évaluation et **en ce que** des composants techniques sont commandés en fonction de l'identifiant d'évaluation, qui ont généré les ensembles de données de journalisation, des écarts dans la première partie d'ensembles de données de journalisation par rapport à la deuxième partie d'ensembles de données de journalisation étant identifiés à l'aide de la comparaison, de sorte qu'une évolution dans le temps des ensembles de données de journalisation peut être identifiée et
- l'identifiant d'évaluation met à disposition au moins une instruction de commande, une valeur numérique, une valeur alphanumérique et/ou un identifiant, et l'identifiant d'évaluation a été associé au préalable de manière empirique à des résultats de comparaison possibles.

2. Procédé selon la revendication 1, **caractérisé en ce qu'**une attribution et une mémorisation d'un identifiant unique sont effectuées pour chaque enregistrement de journalisation afin d'éviter des collisions d'identifiants.

3. Procédé selon l'une des revendications précédentes, **caractérisé en ce que** les ensembles de données disjoints sont vérifiés dans le dispositif de surveillance (M) dans des combinaisons possibles pour des commandes malveillantes.

4. Procédé selon l'une des revendications précédentes, **caractérisé en ce que** les ensembles de données de journalisation reproduisent des paramètres matériels et/ou des comportements d'exécution de composants qui sont couplés en réseau avec le dispositif de surveillance (M).

5. Procédé selon l'une quelconque des revendications précédentes, **caractérisé en ce que** ledit au moins un flux de données continu, lorsqu'il existe de nouveaux enregistrements de journalisation, les transmet de manière proactive à la mémoire de données de consolidation (KDB).

6. Procédé selon l'une quelconque des revendications précédentes, **caractérisé en ce que** les enregistrements d'historique représentent une sélection de paramètres techniques de composants matériels, la sélection comprenant des temps d'exécution, l'utilisation du processeur, l'utilisation de la mémoire, des taux de répétition, des erreurs, des modifications, des configurations, des températures, des ressources disponibles et/ou des comportements.

7. Procédé selon l'une quelconque des revendications précédentes, **caractérisé en ce que** la métrique d'évaluation spécifie comment les ensembles de données de journalisation doivent être comparés et fournit à cet effet une pluralité de règles et d'indices, la pluralité comprenant des règles de comparaison, des nombres cibles, des nombres réels, des nombres cibles, des unités de temps, des paramètres techniques, des écarts, des plages de tolérance, des configurations techniques, des temps d'exécution, des efforts techniques, des procédés statistiques, des procédés mathématiques, des calculs de probabilité, des paramètres de métrique et/ou des règles de métrique.

8. Dispositif de consolidation (K) adapté pour être utilisé dans le procédé selon l'une quelconque des revendications 1 à 8.

9. agencement de système pour l'optimisation de processus et la surveillance en utilisant un flux de données continu, comprenant :
- un dispositif de surveillance (M) aménagé pour mémoriser des ensembles de données de journalisation disjoints dans plusieurs mémoires de données (DBO ; DB1 ; ... ; DBn), une mémoire de données séparée (DBO ; DB1 ; ... ; DBn) étant prévue dans le dispositif de surveillance (M) pour chaque classe prédéfinie de données de journalisation ;
- au moins une unité d'interface aménagée pour la transmission par réseau de tous les enregistrements de données de journalisation mémorisés du dispositif de surveillance (M) à une mémoire de données de consolidation (KDB) d'un dispositif de consolidation (K) au moyen d'au moins un flux de données continu ; et
- une unité de calcul aménagée pour attribuer un identificateur d'évaluation dans le dispositif de consolidation (K) en fonction d'une comparaison d'une première partie d'enregistrements de journalisation avec au moins une deuxième partie d'enregistrements de journalisation selon une métrique d'évaluation prédéfinie et mémorisée, qui est **caractérisée en ce que** l'attribution (102) de l'identificateur d'évaluation s'effectue au résultat de l'évaluation et **en ce que** des composants techniques sont commandés en fonction de l'identificateur d'évaluation, qui ont généré les ensembles de données de journalisation, des écarts dans la première partie d'ensembles de données de journalisation par rapport à la deuxième partie d'ensembles de données de journalisation étant identifiés à l'aide de la comparaison, de sorte qu'une évolution dans le temps des ensembles de données de journalisation peut être identifiée, et
- l'identifiant d'évaluation fournit au moins une instruction de commande, une valeur numérique, une valeur alphanumérique et/ou un identifiant, et l'identifiant d'évaluation a été associé au préalable de manière empirique à des résultats de comparaison possibles.

10. Produit programme d'ordinateur comprenant des instructions qui, lorsque le programme est exécuté par au moins un ordinateur, amènent ce dernier à exécuter les étapes du procédé selon l'une quelconque des revendications 1 à 8.

11. Support de stockage lisible par ordinateur, comprenant des instructions qui, lorsqu'elles sont exécutées par au moins un ordinateur, amènent ce dernier à exécuter les étapes du procédé selon l'une quelconque des revendications 1 à 8.
